# EUROPÄISCHE PATENTSCHRIFT

(11) **EP 2 874 837 B1**
(45) Veröffentlichungstag und Bekanntmachung des Hinweises auf die Patenterteilung: **09.03.2016**
(21) Anmeldenummer: 13739998.6
(22) Anmeldetag: 23.07.2013
(51) Int. Cl.: B60J 7/00

(54) **SCHIEBEHIMMEL FÜR EIN KRAFTFAHRZEUG**
MOVEABLE HEAD-LINER FOR VEHICLE
PANNEAU PLAFOND COULISSANT POUR TOIT DE VÉHICULE

(30) Priorität: 23.07.2012 DE 102012014524
(43) Veröffentlichungstag der Anmeldung: 27.05.2015
(73) Patentinhaber: Webasto SE, 82131 Stockdorf (DE)
(72) Erfinder: HÖLZEL, Dominik, 82140 Olching (DE)
(74) Vertreter: Fischer & Konnerth
(86) Internationale Anmeldenummer: PCT/EP2013/065461
(87) Internationale Veröffentlichungsnummer: WO 2014/016270

(56) Entgegenhaltungen:
- DE-A1-102009 040 766
- DE-A1-102010 018 259
- FR-A1- 2 959 168
- US-A1- 2010 026 055

## Beschreibung

Die Erfindung betrifft einen Schiebehimmel für ein Kraftfahrzeug, der an beidseitigen Führungen verschiebbar geführt ist und ein flexibles Abschattungselement aufweist.

Fahrzeug-Dachabschattungen oder Sonnenschutzeinrichtungen sind als verschiebbar gelagerte, beschichtete Dachhimmelplatten bekannt, die vergleichsweise hohe Herstellkosten aufweisen. Des weiteren sind aufwickelbare Rollos bekannt, die jedoch aufgrund des erforderlichen Durchmessers einer Wickelwelle den Nachteil eines diesbezüglich hohen Bauraumbedarfs besitzen.

Aus der DE 20 2007 009 971 U1 ist ein verschiebbarer Sonnenschutz für Kraftfahrzeuge bekannt geworden, der ein flexibles Abschattungselement aufweist, das z. B. aus einem Gewebe oder einem Stoff gebildet ist und das von einem Rahmen aufgespannt gehalten ist, der zusammen mit einem Zugspriegel das Abschattungselement an allen vier Seiten vollständig einfasst und an seinen beiden Längsseiten in Längsführungen verschiebbar aufgenommen ist. Ein weiterer, gattungsgemäßer verschiebbarer Sonnenschutz ist aus der Schrift DE 10 2010 018 259 A1 bekannt.

Der Erfindung liegt die Aufgabe zugrunde, einen eingangs genannten Schiebehimmel zu schaffen, der hinsichtlich seines Aufbaus vereinfacht ist.

Die Aufgabe wird bei dem eingangs genannten Schiebehimmel erfindungsgemäß dadurch gelöst, dass das Abschattungselement von zwei an den beiden Führungen verschiebbar geführten Seitenprofilleisten des Schiebehimmels aufgespannt ist, dass jede Führung einen vorderen Führungsabschnitt und einen hinteren Führungsabschnitt aufweist, dass die beiden Seitenprofilleisten von den hinteren Führungsabschnitten unter Spannung des Abschattungselements in Querrichtung voneinander beabstandet gehalten sind und von den vorderen Führungsabschnitten in Querrichtung ungespannt geführt sind, und dass die Seitenprofilleisten an den vorderen Führungsabschnitten durch ihre eigene Biegesteifigkeit und/oder durch einen Querspriegel in Querrichtung voneinander beabstandet gehalten sind.

Vorteilhafte Ausgestaltungen der Erfindung sind in den abhängigen Ansprüchen angegeben.

Bei dem erfindungsgemäßen Schiebehimmel sind somit die Seitenprofilleisten durch die beiden sich gegenüber liegenden hinteren Führungsabschnitte gegen die zum Spannen des Abschattungselements erforderliche Spannkraft auf Abstand gehalten, wobei die Spannkraft in Abhängigkeit der Art und des Materials des Abschattungselements unterschiedlich groß sein kann. Das Abschattungselement ist insbesondere nicht eigen- oder formstabil und es ist z. B. ein Gewebe, ein Stoff, ein Netz oder eine Folie. Die Spannkraftabstützung erfolgt entsprechend der jeweiligen Schiebestellung des Schiebehimmels über den jeweils in dem hinteren Führungsabschnitt aufgenommenen Abschnitt der Seitenprofilleiste. Zumindest in einer Schiebestellung des Schiebehimmels, bevorzugt in der Schließstellung oder Abdeckstellung des Schiebehimmels, die auch als vordere Stellung bezeichnet wird, ist ein Mindestlängenabschnitt jeder Seitenprofilleiste am bzw. vor dem Hinterrand des Schiebehimmels in dem hinteren Führungsabschnitt aufgenommen bzw. von diesem in Querrichtung einwärts bzw. in Y-Richtung gegen die Spannkraft abgestützt.

Die Bezeichnung der beiden unterschiedlichen Führungsabschnitte als vordere und hintere Führungsabschnitte ist beispielhaft und der Schiebebewegung des Schiebehimmels aus einer vorderen Schließstellung in eine hintere Offenstellung angepasst. Bei einer anderen Anordnung des Schiebehimmels mit z. B. hinterer Schließstellung sind diese Lagen- und Richtungsbezeichnungen entsprechend anzupassen. Grundsätzlich beziehen sich die in der Beschreibung verwendeten Achsen- und Richtungsbezeichnungen wie z. B. "vorne", "hinten", "seitlich", "quer", "oben" und "unten" auf ein dreidimensionales x-y-z-Fahrzeug-Koordinaten-system.

Die Seitenprofilleisten sind mit ihren jeweiligen Längenabschnitten, die abhängig von der Stellung des Schiebehimmels an den vorderen Führungsabschnitten angeordnet sind, nicht von den vorderen Führungsabschnitten selbst in Querrichtung gegeneinander abgestützt bzw. sie sind ohne Spannkraftabstützung durch die vorderen Führungsabschnitte. Die Spannkraftabstützung erfolgt vielmehr durch die Seitenprofilleisten selbst, die eine gewisse Biegesteifigkeit gegen eine Verformung in Querrichtung aufweisen. In Abhängigkeit des in den vorderen Führungsabschnitten angeordneten größten Längenabschnitts der Seitenprofilleisten ist die erforderliche Mindestbiegesteifigkeit der Seitenprofilleisten ausgelegt. Alternativ zu der Eigenabstützung der Seitenprofilleisten kann ein Querspriegel vorgesehen sein, der die beiden Seitenprofilleisten in Querrichtung voneinander beabstandet hält und somit insbesondere gegen die Spannkraft abstützt. Die Biegesteifigkeit oder Biegefestigkeit der Seitenprofilleisten kann dann reduziert sein. Eine bevorzugte Lösung kombiniert die Abstützung mittels eines Querspriegels mit der Gestaltung der Seitenprofilleisten mit angepasster Biegesteifigkeit.

Der Querspriegel stellt insbesondere auf Höhe des Vorderrandes des Schiebehimmels eine feste Verbindung der beiden sich gegenüber liegenden Seitenprofilleisten bereit. Ein solcher Querspriegel ist insbesondere ein Zugspriegel, über den der Schiebehimmel manuell oder auch motorisch verstellbar ist und der eine synchrone Bewegung der beiden Seitenprofilleisten gewährleistet. Andererseits kann auch eine Betätigungseinrichtung zum Verstellen des Schiebehimmels mit den beiden Seitenprofilleisten mittelbar oder unmittelbar verbunden sein und eine synchrone Verstellung gewährleisten, wenn ein Zugspriegel bzw. ein Querspriegel nicht vorhanden ist.

Somit sind bevorzugt bei dem in Schließstellung angeordneten Schiebehimmel die Seitenprofilleisten zumindest auf Höhe des Hinterrandes des Schiebehimmels von den hinteren Führungsabschnitten voneinander beabstandet gehalten und beim Öffnen des Schiebehimmels vergrößert sich dementsprechend die Stützlänge.

Der erfindungsgemäße Schiebehimmel benötigt somit an seinem Hinterrand keine feste insbesondere rahmenartige Querversteifung zum Spannen des Abschattungselements in Querrichtung zwischen den beidseitigen Führungen und er ist daher im Bereich seines Hinterrandes bevorzugt querspriegelfrei gebildet.

Der erfindungsgemäße Schiebehimmel ist nicht aufwickelbar und stellt somit kein Rollo mit einer Wickelwelle dar. Das Verschieben des Abschattungselements erfolgt vielmehr in einer flachen oder leicht gekrümmten Ebene ohne starkes Abbiegen oder Umbiegen des Abschattungselements und der Seitenprofilleisten.

Als Schiebehimmel wird grundsätzlich eine verschiebbare Abschattungseinrichtung bezeichnet, die z. B. unter einem transparenten Dachteil oder einem transparenten Deckel einer Dachöffnung eines öffnungsfähigen Fahrzeugdaches wie eines Schiebedaches, Schiebe-Hebedaches, Spoilerdaches oder dergleichen angeordnet oder anbringbar ist. Der Schiebehimmel bzw. die Abschattungseinrichtung kann aber auch zum Abdecken von Heckscheiben oder anderen Fahrzeugflächen vorgesehen sein.

Wenn somit der Schiebehimmel an seinem dem Zugspriegel gegenüber liegenden Hinterrand ohne die beiden Seitenprofilleisten verbindendes Querabstützungsteil gebildet ist, ist die Herstellung vereinfacht, da kein großflächiger Rahmen für das Abschattungselement gebildet werden muss. Grundsätzlich ist außer dem Zugspriegel oder Querspriegel keine weitere feste Querverbindung vorgesehen oder erforderlich. Somit bildet ausschließlich der Zugspriegel oder ein vergleichbares Querverstärkungsteil am Schiebehimmel eine starre Verbindung der beiden Seitenprofilleisten. Der Querspriegel oder Zugspriegel kann auch selbst an seinen Seitenrändern in den vorderen Führungsabschnitten gleitend geführt sein. Mittels einer Zentrier- oder Federeinrichtung kann der Querspriegel oder Zugspriegel mittig zwischen den beiden seitlichen Führungen geführt sein.

Zweckmäßigerweise ist in Schließstellung des Schiebehimmels an den Führungen der Übergang von dem vorderen Führungsabschnitt zu dem hinteren Führungsabschnitt kurz vor dem Hinterrand des Schiebehimmels angeordnet und der Schiebehimmel bzw. das Abschattungselement ist in einem hinteren Randabschnitt gespannt gehalten. Die Position des Übergangs kann in Abhängigkeit von der Größe bzw. der Länge des Schiebehimmels bestimmt und festgelegt werden.

Die Seitenprofilleisten können in jeder Gestaltung und Querschnittsform gebildet sein, die die erforderliche Biegesteifigkeit in Abhängigkeit von der nötigen Spannkraft bereitstellt. Die Seitenprofilleisten können grundsätzlich aus Kunststoff oder aus Metall hergestellt sein. Jede Seitenprofilleiste kann im Querschnitt L-förmig gebildet sein, wobei das Abschattungselement am längeren Basisschenkel angebracht ist, der insbesondere in horizontaler Ausrichtung geführt ist. Ein kürzerer Winkelschenkel ragt nach oben und kann zur seitlichen Führung verwendet werden.

Zweckmäßigerweise ist jede Seitenprofilleiste mittels einer Steck- oder Rastverbindung mit dem Querspriegel bzw. dem Zugspriegel verbunden. Jedoch können auch Klebeverbindungen und Schweißverbindungen vorgesehen sein.

Die Seitenprofilleisten können an den Führungen linear oder mit geringer Krümmung längs geführt sein, jedoch ohne wesentliche Umbiegungen. Die Führungen verlaufen üblicher Weise parallel zueinander.

Zweckmäßigerweise ist eine Führungsbahn für die Seitenprofilleisten am hinteren Führungsabschnitt jeder Führung von einem Alu-Strangpressprofil gebildet. Ein solches Profil kann in einfacher Weise mit Hinterschneidungen gebildet werden, so dass Abstützstege oder Abstützwangen oder -flächen für die Abstützung der darin geführten Seitenprofilleiste in Querrichtung oder Y-Richtung gebildet werden können.

Eine Führungsbahn für die Seitenprofilleisten am vorderen Führungsabschnitt kann bevorzugt von zumindest einem Kunststoffprofil gebildet sein und insbesondere als U-förmige Nut gebildet sein. Damit kann der erfindungsgemäße Schiebehimmel insbesondere an einer Rahmenanordnung eines Schiebedaches, Schiebe-Hebedaches oder dergleichen angeordnet werden, bei der für die Lagerung und Führung eines bewegbaren Deckels dieses Daches aus Festigkeitsgründen und fertigungstechnischen Gründen nur im Hinterabschnitt eine Metallschiene erforderlich ist, wohingegen im Vorderabschnitt Kunststoffführungen für die Lagerung des Deckels bevorzugt und ausreichend sind.

Nachfolgend wird die Erfindung anhand eines Ausführungsbeispiels eines erfindungsgemäßen Schiebehimmels unter Bezugnahme auf die Zeichnung näher erläutert. Es zeigt:
- Fig. 1: in einer isometrischen Ansicht einen an seitlichen Führungen gelagerten Schiebehimmel in einer vorderen Schiebestellung;
- Fig. 2: in einer isometrischen Ansicht die Oberseite eines Ausschnitts des linken vorderen Eckbereichs des Schiebehimmels mit einem Zugspriegel und einer linken Seitenprofilleiste;
- Fig. 3: in einer isometrischen Ansicht die Unterseite des Ausschnitts der Fig. 2;
- Fig. 4: in einer Querschnittsansicht gemäß Linie A - A in Fig. 1 den Zugspriegel mit der in der seitlichen Führung aufgenommenen Seitenprofilleiste;
- Fig. 5: in einer Querschnittsansicht gemäß Linie B - B in Fig. 1 die Seitenprofilleiste in der seitlichen Führung; und
- Fig. 6: in einer Querschnittsansicht gemäß Linie C - C in Fig. 1 die Seitenprofilleiste in einem Hinterabschnitt der seitlichen Führung.

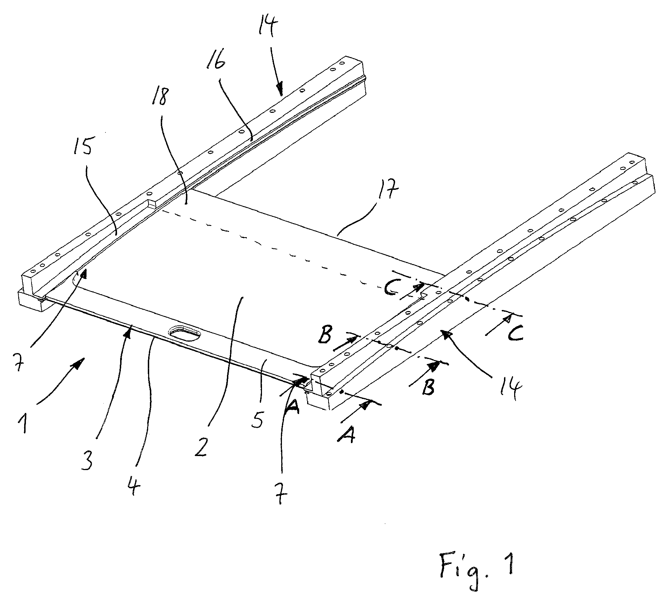

Ein Schiebehimmel 1 eines Kraftfahrzeugs (siehe Fig. 1) enthält ein flächiges Abschattungselement 2, das z. B. aus einem Gewebe, einem Netz, einem Stoff oder einer Folie oder dergleichen gebildet ist und das nicht eigenstabil oder formstabil ist und demnach keine feste Platte oder dergleichen ist. Ein Querspriegel oder Zugspriegel 3 bildet einen Vorderrand 4 des Schiebehimmels 1. Der Zugspriegel 3 weist ein Oberteil 5 und ein Unterteil 6 auf, die miteinander verbunden sind und zwischen denen das Abschattungselement 2 mit seinem Vorderabschnitt eingelegt und festgeklemmt ist.

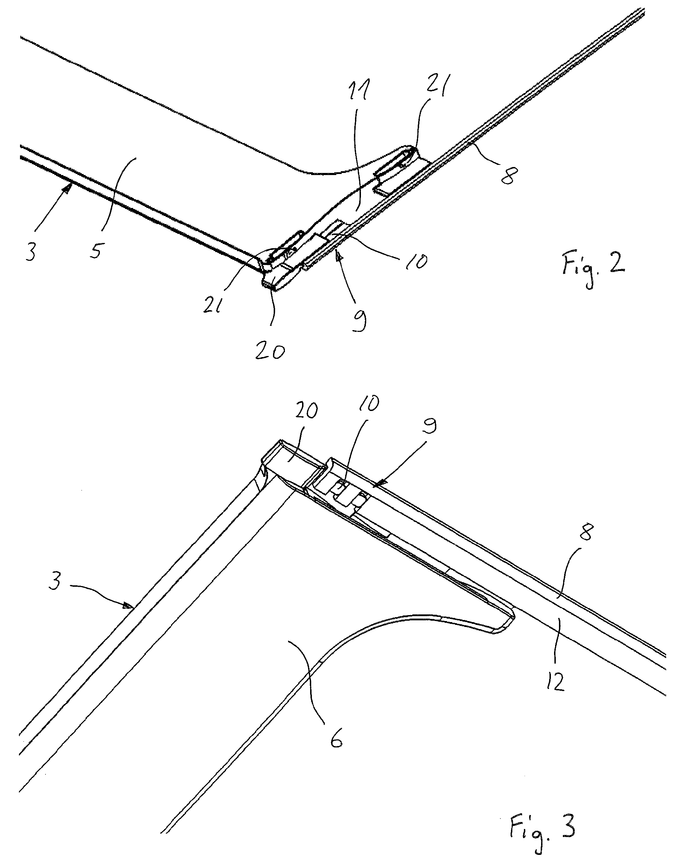

An jeder Längsseite 7 des Schiebehimmels 1 ist eine Seitenprofilleiste 8 angeordnet (siehe Fig. 2 und 3), die an ihrem Vorderabschnitt 9 insbesondere mittels einer Steck- oder Rastverbindung 10 am Seitenrand 11 des Zugspriegels 3 befestigt ist, der ein vorderes Querabstützungsteil des Schiebehimmels 1 bildet. Die beiden sich gegenüberliegenden Seitenprofilleisten 8 erstrecken sich über die Länge des Schiebehimmels 1. Jede Seitenprofilleiste 8 ist in Querrichtung des Schiebehimmels 1 biegesteif und ist beispielsweise im Querschnitt L-förmig mit einem in der Querschnittsebene längeren Basisschenkel 12 und einem davon rechtwinklig bzw. in Z-Richtung nach oben ragenden kürzeren Winkelschenkel 13, durch deren Gestaltung die gewünschte Biegesteifigkeit in Querrichtung oder Y-Richtung erreicht wird. An der Oberseite des Basisschenkels 12 ist das Abschattungselement 2 randseitig befestigt, z. B. durch Verkleben, Verschweißen oder Vernähen.

Jede Seitenprofilleiste 8 ist in einer seitlichen Führung 14 aufgenommen und in Längsrichtung verschiebbar geführt. Die beiden zueinander parallelen Führungen 14 weisen jeweils einen vorderen Führungsabschnitt 15 und einen sich anschließenden hinteren Führungsabschnitt 16 auf. Fig. 1 zeigt den Schiebehimmel 1 in seiner Schließstellung, in der er bezüglich der beiden Führungen 14 eine vordere Stellung einnimmt und bei Einbau unter einem Fahrzeugdach z. B. unter einem Glasdeckel eines öffnungsfähigen Fahrzeugdaches (nicht dargestellt) angeordnet ist. Der vordere Führungsabschnitt 15 erstreckt sich bei in Schließstellung angeordnetem Schiebehimmel 1 nicht über die gesamte Länge des Schiebehimmels 1, sondern endet vor dem Hinterrand 17 des Schiebehimmels 1 bzw. des Abschattungselements 2. Der sich anschließende hintere Führungsabschnitt 16 erstreckt sich somit anfangs entlang eines hinteren Randabschnitts 18 des Schiebehimmels 1 (in Fig. 1 zwischen dem Hinterrand 17 und der davor eingezeichneten unterbrochenen Linie dargestellt) und weiter nach hinten in einer für einen maximalen Verschiebe- oder Öffnungsweg des Schiebehimmels 1 vorgesehenen Länge.

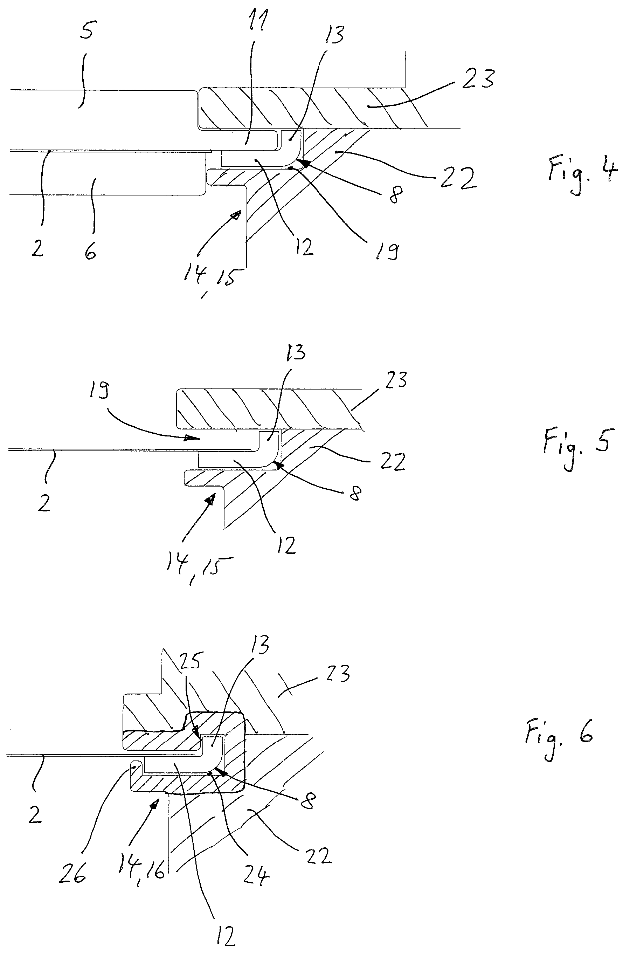

Jede Führung 14 weist im vorderen Führungsabschnitt 15 eine Führungsbahn 19 auf (siehe Fig. 4 und 5), die als nutförmiger und im Querschnitt rechteckiger Kanal gebildet und zum Schiebehimmel 1 hin geöffnet ist. In der Führungsbahn 19 ist die Seitenprofilleiste 8 verschiebbar aufgenommen, wobei die Höhe der Seitenprofilleiste 8 an ihrem Winkelschenkel 13 an die Höhe der Führungsbahn 19 derart angepasst ist, dass sie in Vertikalrichtung im wesentlichen spielfrei geführt ist. Der Zugspriegel 3 ist mit seinem Seitenrand 11 ebenfalls in der Führungsbahn 19 aufgenommen und mit einem vorderen Gleiter 20 darin geführt. Im Bereich jedes Seitenrandes 11 des Zugspriegels 3 sind zwei Federelemente 21 einer Federeinrichtung (siehe Fig. 2) angeordnet, die sich an den sich gegenüber liegenden Führungen 14 abstützen und dabei den Zugspriegel 3 zwischen den beiden Führungen 14 zentriert halten. Die Führung 14 weist im Bereich des vorderen Führungsabschnitts 15 z. B. ein unteres Führungsbauteil 22 und ein obere Führungsbauteil 23 auf, die miteinander verbunden sind und zwischen sich die Führungsbahn 19 bilden. Die beiden Führungsbauteile 22 und 23 sind z. B. aus Kunststoff gebildet und sind insbesondere Teile einer den Schiebehimmel 1 an einer Unterseite des Fahrzeugdaches lagernden Rahmenanordnung einer Schiebedacheinheit.

Im hinteren Führungsabschnitt 16 (siehe Fig. 6) enthält die Führung 14 eine Führungsbahn 24, die insbesondere von einem Aluminium-Strangpressprofil einstückig gebildet ist. Die Führungsbahn 24 ist im Querschnitt an die Seitenprofilleiste 8 derart angepasst, dass sie die Seitenprofilleiste 8 gegen Herausziehen in Querrichtung oder Y-Richtung (d. h. nach links in Fig. 6) hindert. Hierfür weist sie z. B. einen nutförmigen Umgriff 25 für den Winkelschenkel 13 und/oder einen Steg 26 als Anschlag für den Basisschenkel 12 auf. Die beiden Seitenprofilleisten 8 des Schiebehimmels 1 werden von den Führungsbahnen 24 im jeweiligen hinteren Führungsabschnitt 26 in einem solchen Abstand zueinander positioniert, dass sie das Abschattungselement 2 gespannt halten. Die Führungsbahn 24 bzw. das Aluminium-Strangpressprofil ist an zumindest einem Führungsbauteil wie dem unteren Führungsbauteil 22 angebracht oder von den beiden Führungsbauteilen 22 und 23 gehalten. Andererseits kann die Führungsbahn 24 selbst auch von zumindest zwei Führungsbauteilen vergleichbar den beiden Führungsbauteilen 22 und 23 gebildet sein. In jedem Fall geht die vordere Führungsbahn 19 kontinuierlich in die hintere Führungsbahn 24 über, wobei gemäß dem Ausführungsbeispiel der Seitenrand 11 des Zugspriegels 3 sich nur im vorderen Führungsabschnitt 15 bewegen kann, da das Aluminium-Strangpressprofil in der dargestellten Querschnittsform eine Weiterbewegung verhindert.

In der vorderen Schiebestellung oder Schließstellung des Schiebehimmels 1 (Fig. 1) hält somit der Zugspriegel 3 am Vorderrand des Schiebehimmels 1 die beiden Seitenprofilleisten 8 in den beiden vorderen Führungsbahnen 19 in dem vorgesehenen Abstand zum Spannen des Abschattungselements 2 in Querrichtung oder Y-Richtung. Am hinteren Randabschnitt 18 sind die beiden Seitenprofilleisten 8 von den hinteren Führungsbahnen 24 am jeweiligen hinteren Führungsabschnitt 16 auf Abstand gehalten, so dass eine hintere Querabstützung der beiden Seitenprofilleisten 8 wie z. B. ein hinteres Rahmenteil nicht erforderlich ist. Zwischen dem Zugspriegel 3 und dem hinteren Randabschnitt 18 spannen die beiden Seitenprofilleisten 8 das Abschattungselement 2 zwischen sich, da sie aufgrund ihrer Biegesteifigkeit - auch ohne Führung in Querrichtung einwärts wie im hinteren Führungsabschnitt 16 - von der Spannkraft des gespannten Abschattungselements 2 nicht gegeneinander gezogen oder verformt werden.

Beim Verschieben des Schiebehimmels 1 entlang der Führungen 14 in Richtung seiner hinteren Offenstellung gleiten die Seitenprofilleisten 8 mit zunehmender Länge in die hinteren Führungsbahnen 24 am jeweiligen hinteren Führungsabschnitt 16, wobei sich der hintere Randabschnitt 18 mit der seitlichen Distanzführung in den Seitenprofilleisten 8 erweitert, bis der Schiebehimmel 1 im wesentlichen vollständig an den hinteren Führungsabschnitten 16 gelagert ist.

Das dargestellte Querschnittsprofil der Seitenprofilleiste 8 ist beispielhaft. Das Querschnittsprofil kann auch hiervon abweichend gebildet sein, solange es die beschriebene Funktionalität erfüllt. Die Führungen 14 können in Längsrichtung einen leicht gekrümmten Bahnverlauf aufweisen (siehe Fig. 1). Wenn dieser Bahnverlauf einen sich nicht ändernden Krümmungsradius aufweist, können die Seitenprofilleisten 8 mit dieser Krümmung und einer hohen Verformungssteifigkeit hergestellt werden. Bei sich über den Bahnverlauf änderndem Krümmungsradius weisen die Seitenprofilleisten 8 eine Biegesteifigkeit auf, die eine Verformung und Anpassung an den sich in seiner Krümmung ändernden Bahnverlauf der Führung gestattet.

Die in der Beschreibung und anhand des Ausführungsbeispiels sowie in den Figuren offenbarten einzelnen Merkmale der Erfindung können in beliebigen technisch zweckmäßigen Anordnungen und Gestaltungen mit dem Erfindungsgegenstand in seiner allgemeinen Form kombiniert werden.

**Bezugszeichenliste**

| | | | |
|---|---|---|---|
| 1 | Schiebehimmel | 14 | Führung |
| 2 | Abschattungselement | 15 | vorderer Führungsabschnitt |
| 3 | Zugspriegel | 16 | hinterer Führungsabschnitt |
| 4 | Vorderrand | 17 | Hinterrand |
| 5 | Oberteil | 18 | hinterer Randabschnitt |
| 6 | Unterteil | 19 | Führungsbahn |
| 7 | Längsseite | 20 | Gleiter |
| 8 | Seitenprofilleiste | 21 | Federelement |
| 9 | Vorderabschnitt | 22 | unteres Führungsbauteil |
| 10 | Steck- oder Rastverbindung | 23 | oberes Führungsbauteil |
| 11 | Seitenrand | 24 | Führungsbahn |
| 12 | Basisschenkel | 25 | Umgriff |
| 13 | Winkelschenkel | 26 | Steg |

## Patentansprüche

1. Schiebehimmel für ein Kraftfahrzeug, der an beidseitigen Führungen verschiebbar geführt ist und ein flexibles Abschattungselement aufweist, **dadurch gekennzeichnet,**
**dass** das Abschattungselement (2) von zwei an den beiden Führungen (14) verschiebbar geführten Seitenprofilleisten (8) des Schiebehimmels (1) aufgespannt ist,
**dass** jede Führung (14) einen vorderen Führungsabschnitt (15) und einen hinteren Führungsabschnitt (16) aufweist,
**dass** die beiden Seitenprofilleisten (8)
von den hinteren Führungsabschnitten (16) unter Spannung des Abschattungselements (2) in Querrichtung voneinander beabstandet gehalten sind und
von den vorderen Führungsabschnitten (15) in Querrichtung ungespannt geführt sind, und
**dass** die Seitenprofilleisten (8) an den vorderen Führungsabschnitten (15) durch ihre eigene Biegesteifigkeit und/oder durch einen Querspriegel (3) in Querrichtung voneinander beabstandet gehalten sind.

2. Schiebehimmel nach Anspruch 1,
**dadurch gekennzeichnet, dass** der Querspriegel (3) die Seitenprofilleisten (8) auf Höhe des Vorderrandes (4) des Schiebehimmels (1) miteinander fest verbindet.

3. Schiebehimmel nach Anspruch 1 oder 2,
**dadurch gekennzeichnet, dass** bei dem in Schließstellung angeordneten Schiebehimmel (1) die Seitenprofilleisten (8) zumindest auf Höhe des Hinterrandes (17) des Schiebehimmels (1) von den hinteren Führungsabschnitten (16) voneinander beabstandet gehalten sind.

4. Schiebehimmel nach einem der Ansprüche 1 bis 3,
**dadurch gekennzeichnet, dass** der Schiebehimmel (1) im Bereich seines Hinterrandes (17) querspriegelfrei gebildet ist.

5. Schiebehimmel nach einem der Ansprüche 1 bis 4,
**dadurch gekennzeichnet, dass** das Abschattungselement (2) nicht formstabil ist und insbesondere ein Gewebe, ein Stoff, ein Netz oder einer Folie ist.

6. Schiebehimmel nach einem der Ansprüche 1 bis 5,
**dadurch gekennzeichnet, dass** der hintere Führungsabschnitt (16) eine Führungsbahn (24) für die Seitenprofilleiste (8) aufweist, die von einem Alu-Strangpressprofil gebildet ist und insbesondere eine Hinterschneidung zur Spannkraftabstützung der Seitenprofilleiste (8) in Querrichtung aufweist.

7. Schiebehimmel nach einem der Ansprüche 1 bis 6,
**dadurch gekennzeichnet, dass** eine Führungsbahn (19) für die Seitenprofilleisten (8) am vorderen Führungsabschnitt (15) von zumindest einem Kunststoffprofil gebildet ist und insbesondere als U-förmige Nut gebildet ist.

8. Schiebehimmel nach einem der Ansprüche 1 bis 7,
**dadurch gekennzeichnet, dass** die Seitenprofilleisten (8) an den Führungen (14) bzw. den Führungsbahnen (19, 24) linear oder mit geringer Krümmung längs geführt sind.

9. Schiebehimmel nach einem der Ansprüche 1 bis 8,
**dadurch gekennzeichnet, dass** jede Seitenprofilleiste (8) mittels einer Steck- oder Rastverbindung (10) mit dem Querspriegel (3) verbunden ist.

10. Schiebehimmel nach einem der Ansprüche 1 bis 9,
**dadurch gekennzeichnet, dass** der Querspriegel am Vorderrand (4) des Schiebehimmels (1) ein Zugspriegel (3) ist.

11. Schiebehimmel nach einem der Ansprüche 1 bis 10,
**dadurch gekennzeichnet, dass** jede Seitenprofilleiste (8) im Querschnitt L-förmig gebildet ist und das Abschattungselement (2) am längeren Basisschenkel (12) angebracht ist.

## Claims

1. Sliding headliner for a motor vehicle, which is guided displaceably on guides on both sides and has a flexible shading element,
**characterized in that** the shading element (2) is tensioned by two side profile strips (8) of the sliding headliner (1), which side profile strips are guided displaceably on the two guides (14), **in that** each guide (14) has a front guide portion (15) and a rear guide portion (16), **in that** the two side profile strips (8) are held spaced apart from each other in the transverse direction by the rear guide portions (16), thus tensioning the shading element (2), and are guided untensioned in the transverse direction by the front guide portions (15), and **in that** the side profile strips (8) are held on the front guide portions (15) in a manner spaced apart from each other in the transverse direction by means of their own flexural rigidity and/or by means of a transverse bow (3).

2. Sliding headliner according to Claim 1, **characterized in that** the transverse bow (3) firmly connects the side profile strips (8) to each other level with the front edge (4) of the sliding headliner (1).

3. Sliding headliner according to Claim 1 or 2, **characterized in that**, when the sliding headliner (1) is arranged in the closed position, the side profile strips (8) are held spaced apart from each other at least level with the rear edge (17) of the sliding headliner (1) by the rear guide portions (16).

4. Sliding headliner according to one of Claims 1 to 3, **characterized in that** the sliding headliner (1) is formed without a transverse bow in the region of the rear edge (17) thereof.

5. Sliding headliner according to one of Claims 1 to 4, **characterized in that** the shading element (2) is not dimensionally stable and is in particular a woven fabric, a cloth, a net or a sheet.

6. Sliding headliner according to one of Claims 1 to 5, **characterized in that** the rear guide portion (16) has a guide track (24) for the side profile strip (8), which guide track is formed by an aluminium extruded profile and in particular has an undercut for supporting the tensioning force of the side profile strip (8) in the transverse direction.

7. Sliding headliner according to one of Claims 1 to 6, **characterized in that** a guide track (19) for the side profile strips (8) is formed on the front guide portion (15) by at least one plastics profile and is formed in particular as a U-shaped groove.

8. Sliding headliner according to one of Claims 1 to 7, **characterized in that** the side profile strips (8) are guided longitudinally on the guides (14) or the guide tracks (19, 24) in a linear manner or with a slight curvature.

9. Sliding headliner according to one of Claims 1 to 8, **characterized in that** each side profile strip (8) is connected to the transverse bow (3) by means of a plug-in or latching connection (10).

10. Sliding headliner according to one of Claims 1 to 9, **characterized in that** the transverse bow on the front edge (4) of the sliding headliner (1) is a tension bow (3).

11. Sliding headliner according to one of Claims 1 to 10, **characterized in that** each side profile strip (8) is formed in an L-shaped manner in cross section and the shading element (2) is attached to the longer base shank (12).

## Revendications

1. Ciel de toit coulissant pour un véhicule automobile, qui est guidé de manière déplaçable sur des guides bilatéraux, et qui présente un élément d'ombrage flexible,
**caractérisé en ce que**
l'élément d'ombrage (2) est tendu par deux baguettes profilées latérales (8) du ciel de toit coulissant (1) guidées de manière déplaçable sur les deux guides (14),
chaque guide (14) présente une portion de guide avant (15) et une portion de guide arrière (16),
les deux baguettes profilées latérales (8) sont retenues à distance l'une de l'autre par les portions de guide arrière (16) en tendant l'élément d'ombrage (2) dans la direction transversale, et
sont guidées par les portions de guide avant (15) dans la direction transversale sans tension, et
les baguettes profilées latérales (8) sont retenues à distance l'une de l'autre dans la direction transversale au niveau des portions de guide avant (15) sous l'effet de leur propre rigidité en flexion et/ou par un arceau transversal (3).

2. Ciel de toit coulissant selon la revendication 1,
**caractérisé en ce que** l'arceau transversal (3) relie fixement l'une à l'autre les baguettes profilées latérales (8) à la hauteur du bord avant (4) du ciel de toit coulissant (1).

3. Ciel de toit coulissant selon la revendication 1 ou 2, **caractérisé en ce que** lorsque le ciel de toit coulissant (1) est disposé dans la position de fermeture, les baguettes profilées latérales (8) sont retenues à distance l'une de l'autre au moins à la hauteur du bord arrière (17) du ciel de toit coulissant (1) par les portions de guide arrière (16).

4. Ciel de toit coulissant selon l'une quelconque des revendications 1 à 3,
**caractérisé en ce que** le ciel de toit coulissant (1) est formé sans arceau transversal dans la région de son bord arrière (17).

5. Ciel de toit coulissant selon l'une quelconque des revendications 1 à 4,
**caractérisé en ce que** l'élément d'ombrage (2) n'a pas une forme stable et est notamment une toile, une étoffe, un filet ou une feuille.

6. Ciel de toit coulissant selon l'une quelconque des revendications 1 à 5,
**caractérisé en ce que** la portion de guide arrière (16) présente une bande de guidage (24) pour la baguette profilée latérale (8), laquelle est formée d'un profilé filé en aluminium et présente notamment une contre-dépouille pour le support par une force de serrage de la bague profilée latérale (8) dans la direction transversale.

7. Ciel de toit coulissant selon l'une quelconque des revendications 1 à 6,
**caractérisé en ce qu'**une bande de guidage (19) pour les baguettes profilées latérales (8) est formée au niveau de la portion de guide avant (15) par au moins un profilé en plastique et est notamment formée sous forme de rainure en forme de U.

8. Ciel de toit coulissant selon l'une quelconque des revendications 1 à 7,
**caractérisé en ce que** les baguettes profilées latérales (8) sont guidées sous forme linéaire ou avec une faible courbure le long des guides (14) ou des bandes de guidage (19, 24).

9. Ciel de toit coulissant selon l'une quelconque des revendications 1 à 8,
**caractérisé en ce que** chaque baguette profilée latérale (8) est connectée au moyen d'une connexion par enfichage ou par encliquetage (10) à l'arceau transversal (3).

10. Ciel de toit coulissant selon l'une quelconque des revendications 1 à 9,
**caractérisé en ce que** l'arceau transversal au niveau du bord avant (4) du ciel de toit coulissant (1) est un arceau de traction (3).

11. Ciel de toit coulissant selon l'une quelconque des revendications 1 à 10,
**caractérisé en ce que** chaque baguette profilée latérale (8) présente une section transversale en forme de L et l'élément d'ombrage (2) est monté sur la branche de base plus longue (12).
